# EUROPÄISCHE PATENTSCHRIFT

(11) **EP 4 521 632 B1**
(45) Veröffentlichungstag und Bekanntmachung des Hinweises auf die Patenterteilung: **12.08.2026**
(21) Anmeldenummer: 24199223.9
(22) Anmeldetag: 09.09.2024
(51) Int. Cl.: H02S 20/10, E04H 6/02, F24S 25/12

(54) **CARPORT**
CARPORT
ABRI DE GARAGE

(30) Priorität: 07.09.2023 AT 507232023
(43) Veröffentlichungstag der Anmeldung: 12.03.2025
(73) Patentinhaber: Treberspurg, Martin, 1140 Wien (AT)
(72) Erfinder: Treberspurg, Martin, 1140 Wien (AT)
(74) Vertreter: SONN Patentanwälte GmbH & Co KG

(56) Entgegenhaltungen:
- CN-A- 102 277 985
- CN-U- 209 426 588
- CN-U- 211 524 237
- JP-A- 2007 224 673
- JP-A- 2020 026 717
- ANONYMOUS: "Solar Carport mit Flachdach Carports Modern (2+ E Autos)", 29 March 2023 (2023-03-29), pages 1 - 97, XP093242299, Retrieved from the Internet <URL:https://web.archive.org/web/20230329032626/https://www.stahlzart.de/solar-carport-mit-flachdach-carports-pv-anlage/#expand> [retrieved on 20250122]

## Beschreibung

Die Erfindung betrifft ein Carport mit einer Dachfläche und mindestens einer Seitenwand, wobei die Dachfläche an zumindest einer Seite durch die Seitenwand getragen ist, wobei die Dachfläche und die Seitenwand durch auf zumindest zwei Trägern gelagerte Elemente gebildet sind, wobei die Dachfläche an zumindest einer weiteren, von der Seitenwand beabstandeten, insbesondere ihr gegenüberliegenden, Stelle durch mindestens eine Stütze am Untergrund abgestützt ist, wobei sowohl die Dachfläche als auch eine Außenfläche der Seitenwand zumindest teilweise zur Stromerzeugung mittels Photovoltaik eingerichtet sind.

Ein solches Carport oder Flugdach dient zum Einstellen von KFZ, in Gebrauch meistens in Zusammenhang mit Einfamilienhäusern. Da in den nächsten Jahrzehnten die mit Verbrennungsmotoren unter Nutzung von fossiler Energie mit entsprechendem CO2-Ausstoß betriebene KFZ durch elektrisch betriebene KFZ, sogenannte E-Autos, ersetzt werden, wäre es sinnvoll, die vom E-Auto benötigte elektrische Energie unmittelbar am Carport zu erzeugen. Dazu eignen sich Photovoltaik-Paneele, sogenannte PV-Paneele, die den gewünschten elektrischen Gleichstrom (DC) direkt aus der Sonnenstrahlung ohne Emissionen erzeugen können. Durch entsprechende Gleichstromspeicher kann diese elektrische Energiemenge direkt unter dem PV-Carport gespeichert werden und dann zum Aufladen des E-Autos genutzt werden. Moderne E-Autos besitzen Batterien, die bidirektionales Laden zulassen. Dies ermöglicht die Nutzung des Batteriestroms auch im angeschlossenen Haus (V2H - Vehicle-to-Home). Hier ist es auch möglich, den Gleichstrom (DC) in Wechselstrom (AC) durch Wechselrichter umzuwandeln und den Wechselstrom zum Aufladen des E-Autos, für das angeschlossene Haus bzw. für eine angeschlossene Energiepartnerschaft nach dem Erneuerbaren Ausbaugesetz (EAG) zu nutzen.

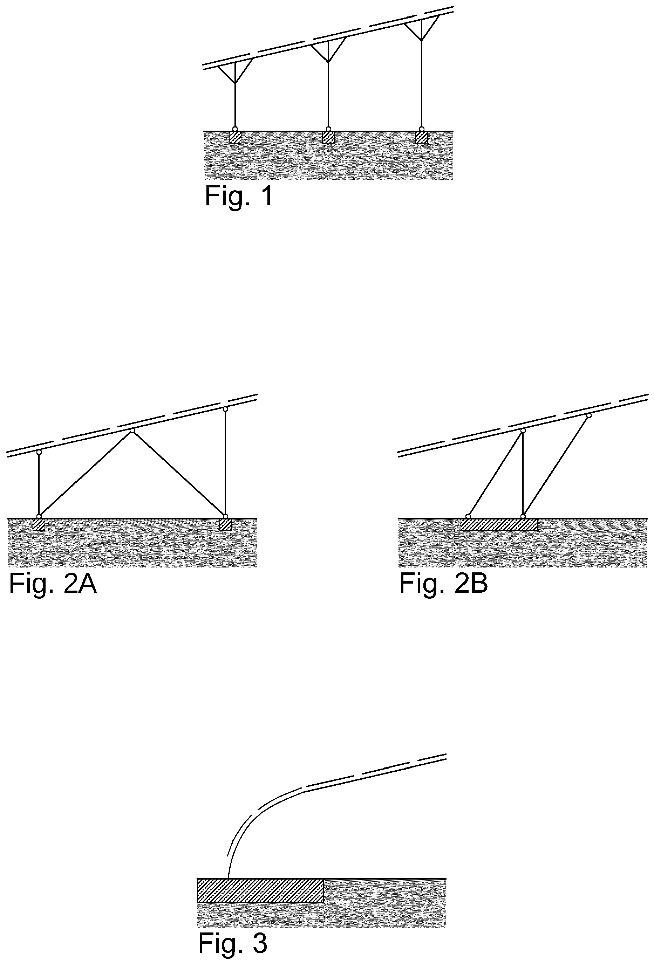

Diese Konstruktionen sind allgemein bekannt und schon teilweise in Gebrauch. Eine Typologie bekannter marktüblicher PV-Carport-Konstruktionen unterscheidet im Wesentlichen Tischsysteme (siehe Fig. 1), Seitenfachwerksysteme (Fig. 2) und Kragsysteme (Fig. 3). Ein solches Tischsystem ist beispielsweise unter der Überschrift "Solar Carport mit Flachdach Carports Modern (2+ E Autos)" online auf der Webseite www.stahlzart.de der Fa. Sebastian Bohry Metallbau Stahlzart ersichtlich. Für alle PV-Carportsysteme, deren PV-Paneele in einer Ebene liegen, ist charakteristisch das nach Süden geneigte PV-Dach, das durch die Neigung eine Vergrößerung der PV-Fläche ermöglicht und zur Wasserableitung dient. Da eine zu große Öffnung an der Nordseite die ursprüngliche Wetterschutzfunktion eines Carports beeinträchtigt, ist dieser Winkel der Schrägstellung mit 10°-15° beschränkt. Tischsysteme (vgl. Fig. 1) sind ähnlich einem Tisch mit vier oder sechs Beinen mit biegesteifen Verankerungen der Stützen in der Dachkonstruktion durch Winkel oder Streben gekennzeichnet, was konstruktiv aufwändig ist. Seitenfachwerksysteme (vgl. Fig. 2) besitzen Querstreben, die fest mit den Stützen in der Form eines Fachwerks, gebildet aus Dreiecken, verbunden sind, was räumliche Einschränkungen an diesen beiden Seiten bedingt. Beide Systeme müssen mit einfachen Fundamenten nur gegen Abheben im Sturmfall gesichert sein. Kragsysteme (vgl. Fig. 3) hingegen mit bogenförmigen oder geknickten Sparrenbindern müssen mit aufwändigen und teuren Stahlbetonfundamenten die Auskragung des Carports im Boden verankern, haben aber den Vorteil, dass auch südorientierte Wandteile für PV-Elemente genutzt werden können.

Die CN 102 277 985 A zeigt schematisch ein rundum geschlossenes Garagengebäude mit Steildach oder Flachdach mit PV-Elementen und mit einem Garagentor.

Die CN 211 524 237 U zeigt eine aufwendige, mehrstöckige Konstruktion aus einem Tragwerk und vertikal beweglichen Abstellplätzen.

Bei JP 2007 224673 A und JP 2020 026717 A handelt es sich um Konstruktionen, die eingespannte Stützen und ein dementsprechend aufwendiges und massives Fundament benötigen.

Die CN 209 426 588 U zeigt ein fachwerkartiges Bogensystem aus Dach und Wandfläche, wobei es sich um eine aufwendige Einspannung handelt, die ebenso ein aufwendiges und massives Fundament benötigt.

Es ist eine Aufgabe der Erfindung, die Nachteile der bekannten Carports zu beheben oder zumindest zu lindern.

Die Erfindung sieht bei einem Carport der eingangs angeführten Art vor, dass die Stütze eine Pendelstütze ist und die Träger an einem Ende am Untergrund abgestützt und gelenkig mit dem Untergrund verbunden sind. Durch die Abstützung der Träger am Ende wird eine relativ gleichmäßige Lastverteilung erreicht. Bei mehreren Stützen können alle Stützen Pendelstützen sein.

Die Dachfläche und die Außenfläche der Seitenwand können jeweils mindestens ein Photovoltaikelement aufweisen, wobei die Photovoltaikelemente in zumindest zwei verschiedene Richtungen ausgerichtet sind. Beispielsweise können ein Photovoltaikelement im Bereich der Dachfläche und ein anderes Photovoltaikelement im Bereich der Seitenwand unterschiedliche Neigungswinkel relativ zu einer Horizontalen aufweisen.

Weiters ist es günstig, wenn die Nutzfläche für die Stromerzeugung, beispielsweise die gesamte wirksame Fläche der Photovoltaikelemente, größer ist als die Grundfläche des Carports. Somit kann mit dem offenbarten Carport eine höhere Gesamtleistung erzielt werden als mit herkömmlichen PV-Carports.

Gemäß einem Ausführungsbeispiel können die Dachfläche und die Seitenwand Teil einer Kragkonstruktion sein. Die Kragkonstruktion kann vorzugsweise gelenkig gelagert sein.

Ein Teil der Dachfläche, insbesondere höchstens die Hälfte der Dachfläche, kann gleichzeitig einen Teil der Außenfläche der Seitenwand bilden. D.h. ein Photovoltaikelement kann gleichzeitig der Dachfläche und einer Außenfläche der Seitenwand zugeordnet sein. Vorzugsweise weisen ein anderer Teil der Dachfläche, welcher nicht zugleich Teil der Seitenwand ist, und ein anderer Teil der Seitenwand, welcher nicht zugleich Teil der Dachfläche ist, ebenfalls zusammen zumindest ein Photovoltaikelement auf, insbesondere jeweils zumindest ein Photovoltaikelement.

Jener Teil der Dachfläche, der gleichzeitig Teil der Außenfläche der Seitenwand ist, ist optional zumindest teilweise zur Stromerzeugung mittels Photovoltaik eingerichtet, wobei vorzugsweise zumindest in diesem Teil mindestens ein Photovoltaikelement angeordnet ist.

Gemäß einem bevorzugten Ausführungsbeispiel sind die Dachfläche und die Seitenwand durch auf drei oder mehr Trägern gelagerte Elemente gebildet. Diese Elemente können zumindest teilweise, vorzugsweise allesamt, Photovoltaikelemente sein.

Die Träger können bogenförmig oder geknickt sein, insbesondere bogenförmige oder geknickte Sparrenbinder.

Mindestens einem, vorzugsweise jedem, Träger kann eine eigene Stütze zugeordnet sein, die ein freies Ende des Trägers am Untergrund abstützt.

Ein freies Ende zumindest eines Trägers kann über einen Rahmen am Untergrund abgestützt sein, wobei der Rahmen durch einen Querträger und zwei Stützen gebildet ist. Unterhalb des Rahmens wird somit eine Zugangsmöglichkeit geschaffen, deren Breite nicht von den gegebenenfalls begrenzten Abständen der Träger abhängt oder dadurch beschränkt wäre.

Die Träger können aus Holz oder Stahl hergestellt sein, insbesondere lamellenverleimte Leimträger oder warmgebogene oder verschweißte Formrohre oder -profile aus Metall.

Zwischen den Trägern können gekreuzte Zugbänder und Druckstreben zur Queraussteifung angeordnet sein.

Beispielsweise können die Träger aus Holz oder Metall als Fachwerkbinder hergestellt sein, die aus Druck- und Zugstangen und Knoten bestehen können, wobei die Knoten, die die Fachwerkstangen verbinden, aus Metall oder Kunststoff hergestellt sind und zugleich die Auflagerpunkte für PV-Elemente bilden.

Alternativ können die Träger beispielsweise aus Holz oder Metall als Fachwerkbinder hergestellt sein, die aus Druck- und Zugstangen und Knoten bestehen, wobei die Knoten jeweils aus zwei Hartholz- bzw. Kunststoff-Mehrschichtplatten bestehen können, die mit Stiften verbunden sind und die Druck- und Zugstangen verankern. Die Knoten können zugleich die Auflagerpunkte für PV-Elemente bilden.

Bei einem Anwendungsbeispiel ist die Außenfläche der Seitenwand zumindest abschnittsweise Richtung des Sonnenhöchststands ausgerichtet. Der Sonnenhöchststand kann dabei in Abhängigkeit vom Standort des Carports festgelegt sein, beispielsweise im Wesentlichen Richtung Süden.

Die Erfindung wird im Folgenden anhand von Ausführungsbeispielen, auf die sie jedoch nicht beschränkt sein soll, und unter Bezugnahme auf die Zeichnungen erläutert. In den Zeichnungen zeigen:
Fig. 1 schematisch eine bekannte PV-Carport-Konstruktion als Tischsystem;
Fig. 2A und 2B schematisch zwei Varianten einer bekannten PV-Carport-Konstruktion als Seitenfachwerksystem;
Fig. 3 schematisch eine bekannte PV-Carport-Konstruktion als Kragsystem;
Fig. 4A schematisch ein erfindungsgemäßes Carport in einer schaubildlichen Ansicht;
Fig. 4B schematisch eine Draufsicht auf das Carport gemäß Fig. 4a;
Fig. 5 schematisch die Auflage von PV-Elementen auf Trägern des Carports gemäß Fig. 4A;
Fig. 6 schematisch die Lagerung und Fundierung des Carports gemäß Fig. 4A in einer Seitenansicht;
Fig. 7 schematisch weitere Einzelheiten der Statik des Carports gemäß Ziffer 4A in einer schaubildlichen Ansicht;
Fig. 8 schematisch ein zweites Ausführungsbeispiel des erfindungsgemäßen Carports und dessen Lagerung und Fundierung in einer Seitenansicht;
Fig. 9 schematisch das Ausführungsbeispiel gemäß Fig. 8 in einer schaubildlichen Ansicht;

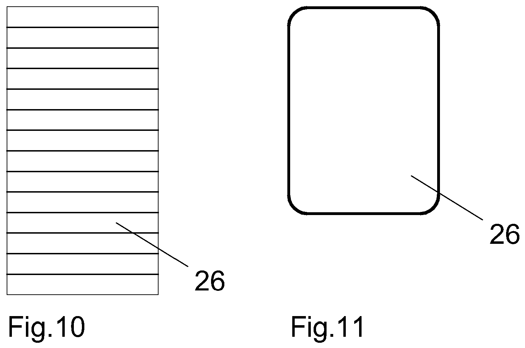

Fig. 10 schematisch eine Schnittansicht eines Leimbinders mit mehreren Schichten;
Fig. 11 schematisch eine Schnittansicht eines Hohlprofils aus Metall;

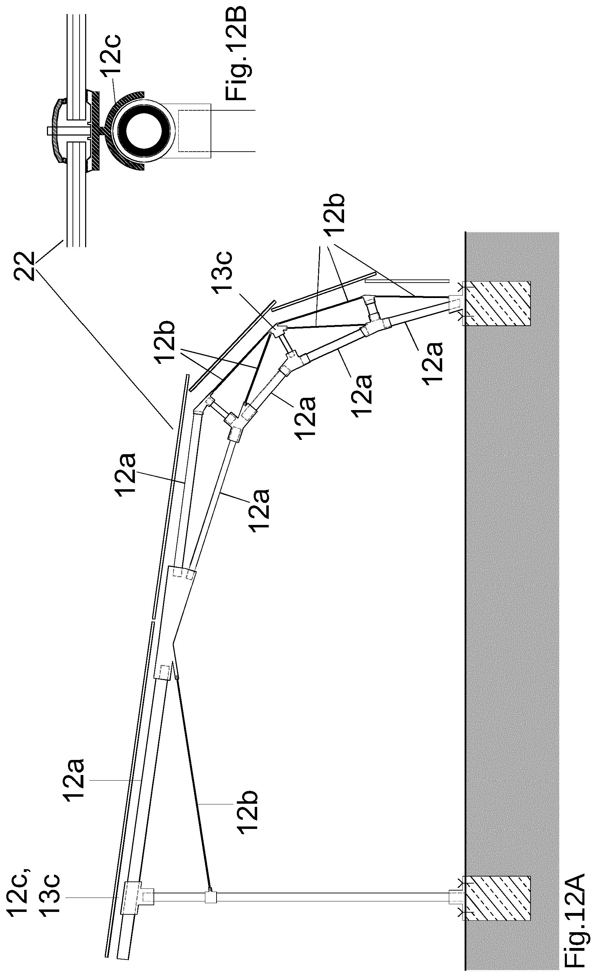

Fig. 12A schematisch eine Seitenansicht auf ein drittes Ausführungsbeispiel des erfindungsgemäßen Carports mit Druck- und Zugstangen sowie Knoten;
Fig. 12B schematisch einen Querschnitt durch einen Knoten gemäß Fig. 12 A;

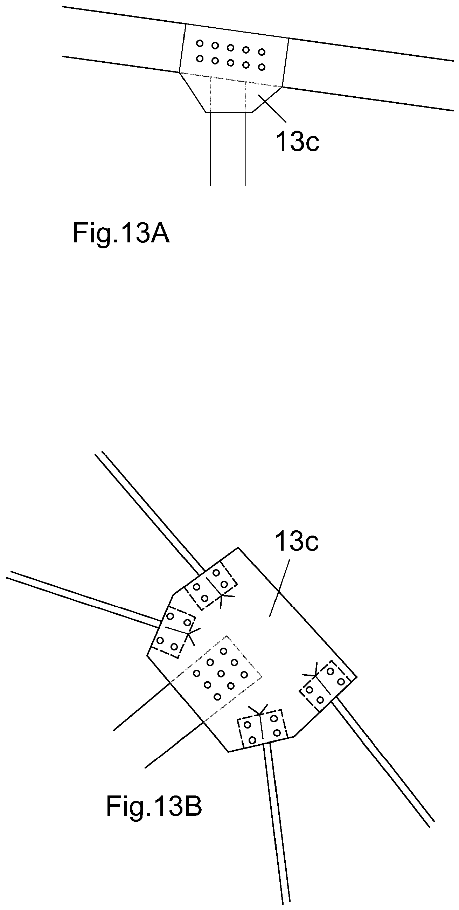

Fig. 13A und 13B schematisch alternative Varianten für die Umsetzung der Knoten des in Fig. 12A gezeigten Ausführungsbeispiels;
Fig. 14 schematisch den Schichtaufbau eines PV-Elements zur Verwendung mit dem erfindungsgemäßen Carport;
Fig. 15 schematisch die Anordnung der PV Elemente mit Überdachung in der Spalte zur Abdichtung des erfindungsgemäßen Carports.

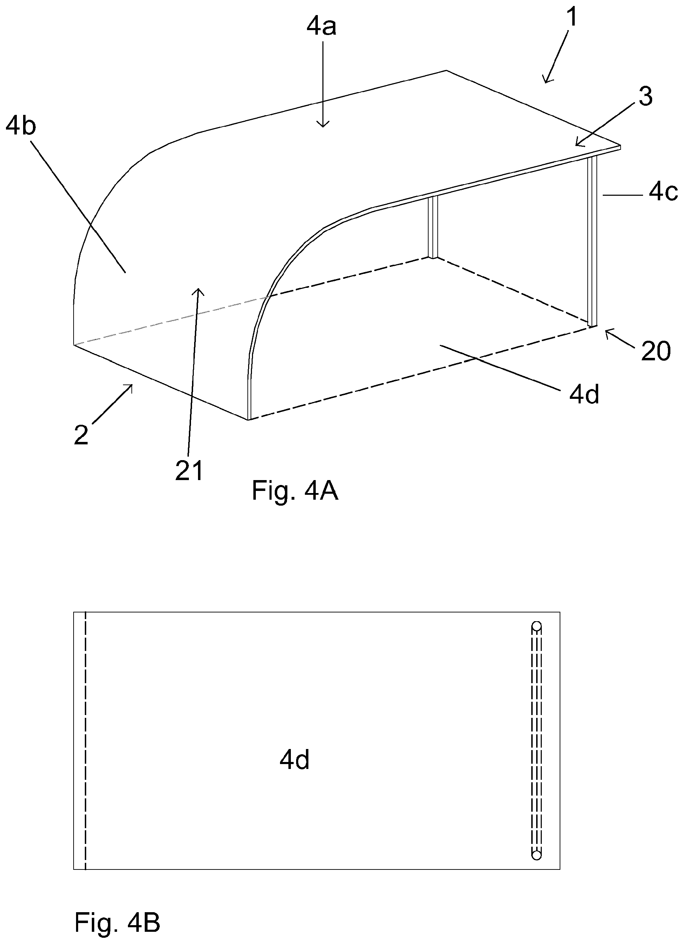

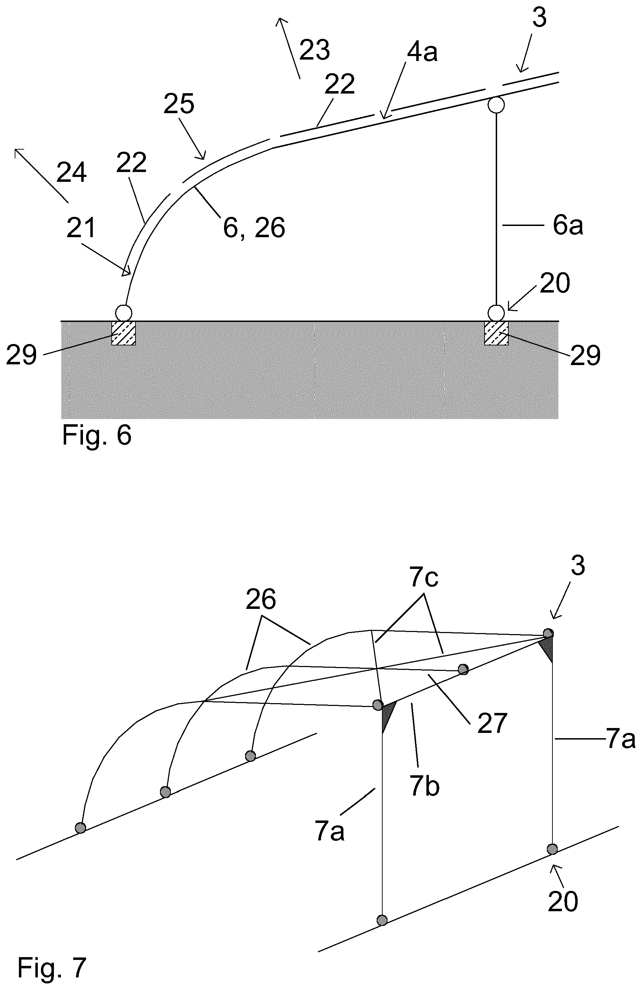

Das in Fig. 4A gezeigte Ausführungsbeispiel sieht die Ausbildung des Flugdaches derart vor, dass ein oder zwei Wandflächen, d. h. Außenflächen einer Seitenwand, vorzugsweise in schrägen Winkeln nach Süden orientiert, zusätzlich zur Anbringung von PV-Paneelen und damit zur Gewinnung von Solarstrom genutzt werden, wobei der Charakter eines Flugdaches erhalten bleibt (4a, 4b, 4c). Somit ist es möglich, dass die wirksame Fläche der PV-Paneele größer als die überdeckte Grundfläche (4d) ist, was im Zusammenhang mit dem wirtschaftlichen Tragwerk neuartig ist. Die wirksame PV-Fläche ist die reine energiegewinnende Fläche der PV-Paneele (5) ohne nicht wirksame Flächenanteile für Befestigung und Randausbildung. Diese Gesamtfläche ist hier größer als die Fläche des Carportdaches, die durch Schrägstellung erreicht werden kann. Dieses für die Dach- und teilweise Wandfläche erforderliche Tragwerk ist so ausgebildet, dass das konstruktive Tragsystem aus mehreren Trägern, in diesem Beispiel bogenförmigen (6, 7) bzw. geknickten (8, 9) Sparrenbindern (vorzugsweise gleichartiger Abmessung), besteht. Diese sind an einem Ende gelenkig mit dem Boden und mit dem anderen Ende gelenkig mit einer gelenkig am Boden befestigten Stütze (6a, 7a, 8a, 9a) verbunden bzw. mit einem auf gelenkigen Stützen gelagerten Träger (7b, 9b) verbunden (vergleiche Fig. 6). Die Queraussteifung erfolgt durch die Dachschalung oder durch gekreuzte Zugbänder (7c, vergleiche Fig. 7) kombiniert mit Druckstreben oder durch einen gelenkig mit dem Boden verankerten Rahmen. Der Vorteil dieser Konstruktion ist es, dass die Fundamente sehr wirtschaftlich ausgebildet werden können, da nur Normalkräfte und keine Drehmomentkräfte aufgenommen werden müssen. Zusammen mit einer entsprechenden Vorfertigung der Komponenten kann das "PV-Carport" durch diese Form und Konstruktion sehr kostengünstig hergestellt werden.

Fig. 4A zeigt ein Carport 1 mit einer Dachfläche 4a und mindestens einer Seitenwand 4b. Die Dachfläche 4a ist an zumindest einer Seite 2 durch die Seitenwand 4b getragen. Die Dachfläche 4a ist an zumindest einer weiteren, von der Seitenwand 4b beabstandeten und gegenüberliegenden Stelle 3 durch mindestens eine Stütze 4c am Untergrund 20 abgestützt. Sowohl die Dachfläche 4a als auch eine Außenfläche 21 der Seitenwand 4b sind zumindest teilweise zur Stromerzeugung mittels Photovoltaik 5 eingerichtet.

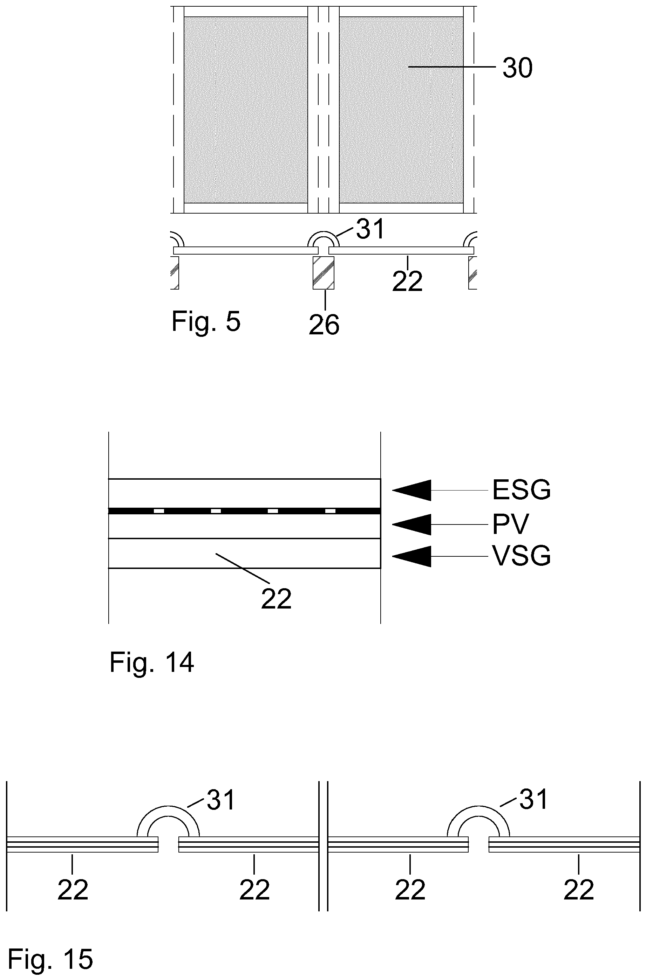

Die Dachfläche 4a und die Außenfläche 21 der Seitenwand 4b weisen jeweils mindestens ein Photovoltaikelement 22 (auch PV-Element) auf. Die Photovoltaikelemente 22 sind in zumindest zwei verschiedene Richtungen 23, 24 ausgerichtet. Die Nutzfläche für die Stromerzeugung, beispielsweise die gesamte wirksame Fläche 30 (vgl. Fig. 5) der Photovoltaikelemente 22 ist größer als die Grundfläche 4d des Carports 4 (vgl. Fig. 4B). Bei der wirksamen Fläche 30 ausgenommen sind etwaige Überdachungen 31 der Spalte zwischen den PV-Elementen 22, zum Schutz der Träger 26.

Wie in Fig. 6 und 7 ersichtlich, sind die Dachfläche und die Seitenwand Teil einer gelenkig gelagerten Kragkonstruktion. Ein Teil 25 der Dachfläche 4a bildet gleichzeitig einen Teil der Außenfläche 21 der Seitenwand 4b. Jener Teil der Dachfläche, der gleichzeitig Teil der Außenfläche der Seitenwand ist, ist ebenfalls zur Stromerzeugung mittels Photovoltaik eingerichtet. Es sind auch in diesem Teil Photovoltaikelemente 22 angeordnet.

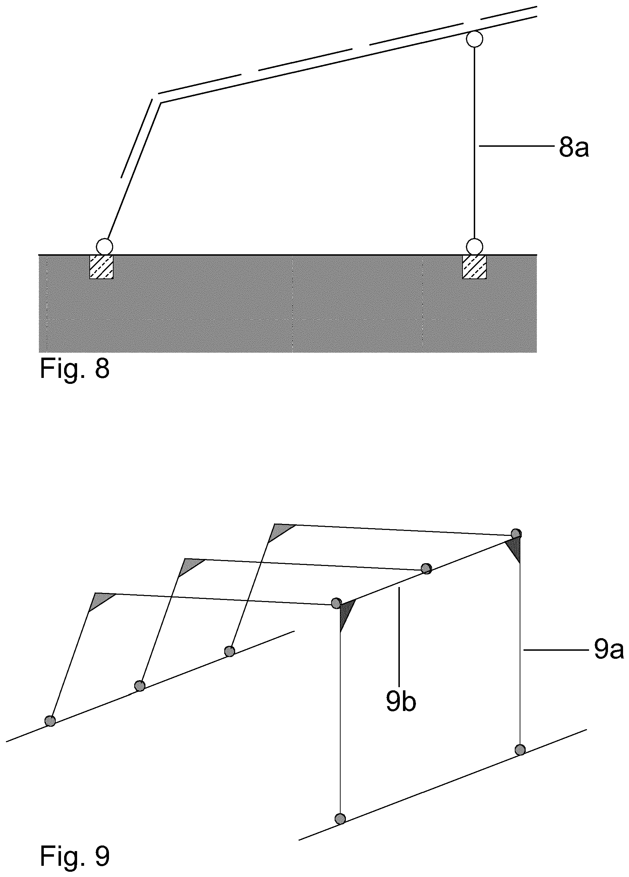

Die Dachfläche und die Seitenwand sind durch auf drei Trägern 26 gelagerte Elemente gebildet. Die Träger sind in diesem Ausführungsbeispiel bogenförmige Sparrenbinder. Im zweiten Ausführungsbeispiel gemäß Fig. 8 und 9 sind es geknickte Spannungbinder. Die Träger sind an einem Ende 3 am Untergrund 20 abgestützt und gelenkig mit dem Untergrund verbunden. Für die Verbindungen sind im Untergrund 20 Fundierungen 29 vorgesehen, die lediglich Druck- und Zugkräfte aufnehmen müssen, jedoch keine Momente. Ein freies Ende des mittleren Trägers 27 ist über einen Rahmen 7b am Untergrund 20 abgestützt. Der Rahmen 7b ist durch eine Querträger 28 und zwei Stützen 7a gebildet.

Die bogenförmigen Sparrenbinder (6, 7) können aus hydraulisch gebogenen Holz-Leimbindern mit einer Holzlamellenstärke von üblicherweise 10mm hergestellt werden (10) Ebenso ist es möglich Hohlprofile (11) aus Metall (üblicherweise Vierkantrohre) warm zu biegen. Geknickte Sparrenbinder (8, 9) können aus verschweißten Metallprofilen hergestellt werden. Bei industrieller Fertigung mit großer Stückzahl kann der Material- und Herstellungsaufwand durch Fachwerkbinder optimiert werden. Diese Fachwerkbinder (12, 13) bestehen aus Druck- (12a, 13a) und Zugstangen (12b, 13b), die mit Knoten (12c) aus Metall oder Kunststoff verbunden sind. Die Knoten können auch aus zwei Hartholz- bzw. Kunststoff-Mehrschichtplatten (13c) bestehen, die mit Stiften verbunden sind und zur Verankerung der Druck- und Zugstangen dienen.

Die PV-Paneele, in handelsüblichen wirtschaftlichen Tafelgrößen, können auf einer wasserdichten Dachdeckung, die auf einer Dach-Wandschalung aufgebracht ist, mit handelsüblichen Aufständerungen verlegt werden. Es ist jedoch auch möglich, PV-Paneele (14) zu verwenden, die aus einer ESG (Einscheibensicherheitsglas)-Verglasung mit PV-Zwischenschicht und einer unteren VSG (Verbundsicherheitsglas)-Verglasung bestehen und die Dach- bzw. Wanddecken bilden. Hier werden zur Halterung der PV-Paneele handelsübliche Profilsysteme für kittlose Dachverglasungen (15) verwendet (vergleiche Fig. 14).

Der durch die PV-Paneele gewonnene Gleichstrom (DC) wird gemäß einem Anwendungsbeispiel vorerst in Gleichstrombatterien gespeichert. Diese Strommenge kann entweder direkt oder über Wechselrichter mit handelsüblichen Ladestationen als Wechselstrom in das E-Auto eingespeist werden oder im angeschlossenen Haus oder im Rahmen einer Energiepartnerschaft als Erneuerbare-Energie-Gemeinschaft (EEG) genutzt werden.

Durch die PV-Carports gewonnene Strommenge kann zumindest ein wesentlicher Teil des Strombedarfs des E-Autos abgedeckt werden. Üblicherweise wird mehr Strom gewonnen als das E-Auto für die Mobilitätsenergie benötigt. Moderne E-Autos besitzen Batterien, die bidirektionales Laden zulassen. Dies ermöglicht die Nutzung des Batteriestroms auch im angeschlossenen Haus (V2H - Vehicle-to-Home). Bei entsprechender Zusammenarbeit mit den EVUs (Elektro-Versorgungs-Unternehmen) ist es auch möglich durch "gesteuertes, bidirektionales Laden" elektrischen Strom aus der E-Auto-Batterie bei Strombedarfsspitzen gegen entsprechende Vergütung an das Stromnetz des EVUs abzugeben (V2G - Vehicle-to-Grid). Wenn es in Zukunft entsprechende Wechselbatterien für E-Autos am Markt gibt (alle chinesischen E-Autos sind damit ausgestattet), ist es auch möglich diese vollgeladenen Wechselbatterien mit den leer gefahrenen Wechselbatterien auf einfache Weise auszutauschen.

Insgesamt löst das in der Erfindung beschriebene System des "PV-Carports" wichtige Fragen der E-Mobilität und der Gewinnung von erneuerbarem, elektrischen Strom außerhalb der bestehenden Stromnetze, wodurch es zu einer entsprechenden Entlastung der zentralen Stromerzeugungs- und Versorgungssysteme kommt. Der Doppelnutzen des erfindungsgemäßen "PV-Carports" ermöglicht gleichzeitig den Schutz des eingestellten E-Autos vor Regen, Schnee, Hagel und Sonnenstrahlen und stellt zusätzlich die Energie für die Fahrten des E-Autos kostenlos zur Verfügung. Bei entsprechenden Vertriebssystemen und Vorteile einer industriellen Fertigung ist mit einer kurzfristigen Amortisation der getätigten Investitionen zu rechnen, vor allem wenn es in Zukunft zu einer entsprechenden CO2-Bepreisung kommt.

## Patentansprüche

1. Carport (4) mit einer Dachfläche (4a) und mindestens einer Seitenwand (4b), wobei die Dachfläche an zumindest einer Seite durch die Seitenwand getragen ist, wobei die Dachfläche und die Seitenwand durch auf zumindest zwei Trägern gelagerte Elemente gebildet sind, wobei die Dachfläche an zumindest einer weiteren, von der Seitenwand beabstandeten, insbesondere ihr gegenüberliegenden, Stelle durch mindestens eine Stütze (4c) am Untergrund abgestützt ist, wobei sowohl die Dachfläche (4a) als auch eine Außenfläche der Seitenwand (4b) zumindest teilweise zur Stromerzeugung mittels Photovoltaik (5) eingerichtet sind, **dadurch gekennzeichnet, dass** die Stütze (4c) eine Pendelstütze ist und die Träger an einem Ende am Untergrund abgestützt und gelenkig mit dem Untergrund verbunden sind.

2. Carport nach Anspruch 1, **dadurch gekennzeichnet, dass** die Dachfläche (4a) und die Außenfläche der Seitenwand (4b) jeweils mindestens ein Photovoltaikelement aufweisen, wobei die Photovoltaikelemente in zumindest zwei verschiedene Richtungen ausgerichtet sind.

3. Carport gemäß einem der vorstehenden Ansprüche, **dadurch gekennzeichnet, dass** die Nutzfläche für die Stromerzeugung, beispielsweise die gesamte wirksame Fläche der Photovoltaikelemente (4a und 4b), größer als die Grundfläche (4d) des Carports (4) ist.

4. Carport gemäß einem der vorstehenden Ansprüche, **dadurch gekennzeichnet, dass** die Dachfläche und die Seitenwand Teil einer, insbesondere gelenkig gelagerten, Kragkonstruktion sind.

5. Carport gemäß einem der vorstehenden Ansprüche, **dadurch gekennzeichnet, dass** ein Teil der Dachfläche, insbesondere höchstens die Hälfte der Dachfläche, gleichzeitig einen Teil der Außenfläche der Seitenwand bildet.

6. Carport gemäß Anspruch 5, **dadurch gekennzeichnet, dass** jener Teil der Dachfläche, der gleichzeitig Teil der Außenfläche der Seitenwand ist, zumindest teilweise zur Stromerzeugung mittels Photovoltaik eingerichtet ist, wobei vorzugsweise zumindest in diesem Teil mindestens ein Photovoltaikelement angeordnet ist.

7. Carport gemäß einem der vorstehenden Ansprüche, **dadurch gekennzeichnet, dass** die Dachfläche und die Seitenwand durch auf drei oder mehr Trägern gelagerte Elemente gebildet sind.

8. Carport gemäß Anspruch 7, **dadurch gekennzeichnet, dass** die Träger bogenförmig oder geknickt sind, insbesondere bogenförmige oder geknickte Sparrenbinder.

9. Carport gemäß einem der Ansprüche 1 bis 8, **dadurch gekennzeichnet, dass** mindestens einem, vorzugsweise jedem, Träger eine eigene Stütze zugeordnet ist, die ein freies Ende des Trägers am Untergrund abstützt.

10. Carport gemäß einem der Ansprüche 1 bis 9, **dadurch gekennzeichnet, dass** ein freies Ende zumindest eines Trägers über einen Rahmen am Untergrund abgestützt ist, wobei der Rahmen durch eine Querträger und zwei Stützen gebildet ist.

11. Carport gemäß einem der Ansprüche 1 bis 10, **dadurch gekennzeichnet, dass** die Träger aus Holz oder Stahl hergestellt sind, insbesondere lamellenverleimte Leimträger (10) oder warmgebogene oder verschweißte Formrohre (11) oder -profile aus Metall.

12. Carport gemäß einem der Ansprüche 1 bis 11, **dadurch gekennzeichnet, dass** zwischen den Trägern gekreuzte Zugbänder und Druckstreben zur Queraussteifung angeordnet sind.

13. Carport nach einem der Ansprüche 1 bis 12, **dadurch gekennzeichnet, dass** die Träger aus Holz oder Metall als Fachwerkbinder (12, 13) hergestellt sind, die aus Druck-(12a, 13a) und Zugstangen (12b, 13b) und Knoten (12c) bestehen, wobei die Knoten, die die Fachwerkstangen verbinden, aus Metall oder Kunststoff hergestellt sind und zugleich die Auflagerpunkte für PV-Elemente bilden.

14. Carport nach einem der Ansprüche 1 bis 12, **dadurch gekennzeichnet, dass** die Träger aus Holz oder Metall als Fachwerkbinder (12, 13) hergestellt sind, die aus Druck-(12a, 13a) und Zugstangen (12b, 13b) und Knoten (13c) bestehen, wobei die Knoten jeweils aus zwei Hartholz- bzw. Kunststoff-Mehrschichtplatten bestehen, die mit Stiften verbunden werden und die Druck- und Zugstangen verankern.

## Claims

1. A carport (4) comprising a roof surface (4a) and at least one side wall (4b), wherein the roof surface is carried on at least one side by the side wall, wherein the roof surface and the side wall are formed by elements supported on at least two beams, wherein the roof surface is supported on the ground at at least one further location spaced apart from the side wall, in particular opposite to it, by at least one support (4c), wherein both the roof surface (4a) and an outer surface of the side wall (4b) are at least partially configured for power generation by means of photovoltaics (5), **characterized in that** the support (4c) is a pendulum support and the beams are supported on the ground at one end and are articulatedly connected to the ground.

2. The carport according to claim 1, **characterized in that** the roof surface (4a) and the outer surface of the side wall (4b) each comprise at least one photovoltaic element, wherein the photovoltaic elements are oriented in at least two different directions.

3. The carport according to any one of the preceding claims, **characterized in that** the usable area for power generation, for example the entire effective area of the photovoltaic elements (4a and 4b), is larger than the base area (4d) of the carport (4).

4. The carport according to any one of the preceding claims, **characterized in that** the roof surface and the side wall are part of a cantilever structure, in particular articulatedly supported.

5. The carport according to any one of the preceding claims, **characterized in that** a part of the roof surface, in particular at most half of the roof surface, simultaneously forms a part of the outer surface of the side wall.

6. The carport according to claim 5, **characterized in that** that part of the roof surface which simultaneously is part of the outer surface of the side wall is at least partially configured for power generation by means of photovoltaics, wherein preferably at least one photovoltaic element is arranged at least in this part.

7. The carport according to any one of the preceding claims, **characterized in that** the roof surface and the side wall are formed by elements supported on three or more beams.

8. The carport according to claim 7, **characterized in that** the beams are arched or bent, in particular arched or bent rafter trusses.

9. The carport according to any one of claims 1 to 8, **characterized in that** at least one, preferably each, beam is assigned a separate support, which supports a free end of the beam on the ground.

10. The carport according to any one of claims 1 to 9, **characterized in that** a free end of at least one beam is supported on the ground via a frame, wherein the frame is formed by a crossbeam and two supports.

11. The carport according to any one of claims 1 to 10, **characterized in that** the beams are made of wood or steel, in particular glued laminated timber beams (10) or hot-bent or welded shaped tubes (11) or profiles made of metal.

12. The carport according to any one of claims 1 to 11, **characterized in that** crossed tension bands and compression struts for transverse stiffening are arranged between the beams.

13. The carport according to any one of claims 1 to 12, **characterized in that** the beams made of wood or metal are produced as truss girders (12, 13), which consist of compression rods (12a, 13a) and tension rods (12b, 13b) and nodes (12c), wherein the nodes connecting the truss rods are made of metal or plastic and at the same time form the support points for PV elements.

14. The carport according to any one of claims 1 to 12, **characterized in that** the beams made of wood or metal are produced as truss girders (12, 13), which consist of compression rods (12a, 13a) and tension rods (12b, 13b) and nodes (13c), wherein the nodes each consist of two hardwood or plastic multilayer boards, which are connected with pins and anchor the compression rods and tension rods.

## Revendications

1. Carport (4) comprenant une surface de toit (4a) et au moins une paroi latérale (4b), dans lequel la surface de toit est portée sur au moins un côté par la paroi latérale, dans lequel la surface de toit et la paroi latérale sont formées par des éléments montés sur au moins deux poutres, dans lequel la surface de toit est en appui sur le sol à au moins un autre endroit, distant de la paroi latérale, en particulier opposé à celle-ci, par au moins un poteau (4c), dans lequel aussi bien la surface de toit (4a) qu'une surface extérieure de la paroi latérale (4b) sont aménagées au moins partiellement pour la production d'électricité au moyen d'un système photovoltaïque (5), **caractérisé en ce que** le poteau (4c) est un poteau pendulaire et les poutres sont en appui à une extrémité sur le sol et sont reliées de manière articulée au sol.

2. Carport selon la revendication 1, **caractérisé en ce que** la surface de toit (4a) et la surface extérieure de la paroi latérale (4b) présentent chacune au moins un élément photovoltaïque, dans lequel les éléments photovoltaïques sont orientés dans au moins deux directions différentes.

3. Carport selon l'une des revendications précédentes, **caractérisé en ce que** la surface utile pour la production d'électricité, par exemple la surface active totale des éléments photovoltaïques (4a et 4b), est supérieure à la surface au sol (4d) du carport (4).

4. Carport selon l'une des revendications précédentes, **caractérisé en ce que** la surface de toit et la paroi latérale font partie d'une construction en porte-à-faux, en particulier montée de manière articulée.

5. Carport selon l'une des revendications précédentes, **caractérisé en ce qu'**une partie de la surface de toit, en particulier au plus la moitié de la surface de toit, forme simultanément une partie de la surface extérieure de la paroi latérale.

6. Carport selon la revendication 5, **caractérisé en ce que** ladite partie de la surface de toit, qui est simultanément une partie de la surface extérieure de la paroi latérale, est au moins partiellement aménagée pour la production d'électricité au moyen d'un système photovoltaïque, dans lequel de préférence au moins un élément photovoltaïque est disposé au moins dans cette partie.

7. Carport selon l'une des revendications précédentes, **caractérisé en ce que** la surface de toit et la paroi latérale sont formées par des éléments montés sur trois poutres ou plus.

8. Carport selon la revendication 7, **caractérisé en ce que** les poutres sont en forme d'arc ou coudées, en particulier des fermes de chevrons en forme d'arc ou coudées.

9. Carport selon l'une des revendications 1 à 8, **caractérisé en ce qu'**à au moins une, de préférence à chaque, poutre est associé son propre poteau, qui appuie une extrémité libre de la poutre sur le sol.

10. Carport selon l'une des revendications 1 à 9, **caractérisé en ce qu'**une extrémité libre d'au moins une poutre est en appui sur le sol par l'intermédiaire d'un cadre, dans lequel le cadre est formé par une poutre transversale et deux poteaux.

11. Carport selon l'une des revendications 1 à 10, **caractérisé en ce que** les poutres sont fabriquées en bois ou en acier, en particulier des poutres en bois lamellé-collé (10) ou des tubes profilés (11) ou profilés en métal formés à chaud ou soudés.

12. Carport selon l'une des revendications 1 à 11, **caractérisé en ce que** des tirants croisés et des barres de compression sont disposés entre les poutres pour le contreventement transversal.

13. Carport selon l'une des revendications 1 à 12, **caractérisé en ce que** les poutres en bois ou en métal sont fabriquées en tant que fermes en treillis (12, 13), qui sont constituées de barres de compression (12a, 13a) et de traction (12b, 13b) et de nœuds (12c), dans lequel les nœuds, qui relient les barres de treillis, sont fabriqués en métal ou en matière plastique et forment en même temps les points d'appui pour des éléments PV.

14. Carport selon l'une des revendications 1 à 12, **caractérisé en ce que** les poutres en bois ou en métal sont fabriquées en tant que fermes en treillis (12, 13), qui sont constituées de barres de compression (12a, 13a) et de traction (12b, 13b) et de nœuds (13c), dans lequel les nœuds sont constitués chacun de deux plaques multicouches en bois dur ou en matière plastique, qui sont reliées par des broches et ancrent les barres de compression et de traction.
